# EUROPÄISCHE PATENTANMELDUNG

(11) **EP 4 324 728 A1**
(43) Veröffentlichungstag der Anmeldung: **21.02.2024**
(21) Anmeldenummer: 23186344.0
(22) Anmeldetag: 19.07.2023
(51) Int. Cl.: B62D 55/253

(54) **LAUFWERKSKETTE FÜR EINE PISTENRAUPE UND PISTENRAUPE**

(30) Priorität: 17.08.2022 DE 102022208545
(71) Anmelder: Kässbohrer Geländefahrzeug AG, 88471 Laupheim (DE)
(72) Erfinder: Zacharias, Benjamin, 88471 Laupheim (DE)
(74) Vertreter: Patentanwälte Ruff, Wilhelm, Beier, Dauster & Partner mbB

(57) **Zusammenfassung**

Eine Laufwerkskette (1) für ein Kettenfahrzeug, insbesondere für eine Pistenraupe (21), mit wenigstens einem in Kettenlaufrichtung (L) längserstreckten flexiblen Kettenband (2,2') sowie mit einer Vielzahl an in Kettenlaufrichtung (L) voneinander beabstandeten, in Querrichtung erstreckten und an dem wenigstens einen Kettenband befestigten Kettenstegen (3), ist bekannt. Gemäß der Erfindung ist vorgesehen, dass das Kettenband (2,2') - in Kettenlaufrichtung zwischen den Kettenstegen (3) - mit Aussparungen (4,4a,4b,4c) versehen ist, die derart gestaltet und angeordnet sind, dass sich bei Belastung der Laufwerkskette ein zumindest weitgehend gleichmäßiger Kraftfluss in dem Kettenband (2,2') zwischen den benachbarten Kettenstegen (3) ergibt. Einsatz bei Kettenfahrzeugen, insbesondere zur Präparierung einer Schneepiste.

## Beschreibung

Die Erfindung betrifft eine Lauwerkskette nach dem Oberbegriff des Anspruchs 1 sowie eine Pistenraupe nach Anspruch 14.

Eine Laufwerkskette für eine Pistenraupe ist aus der DE 10 2020 208 735 A1 bekannt. Diese weist eine Mehrzahl an in Kettenlaufrichtung längserstreckten flexiblen Kettenbändern auf, die entlang einer quer zur Kettenlaufrichtung orientierten Querrichtung voneinander beabstandet und zueinander parallel verlaufend angeordnet sind. Die Kettenbänder sind mit einem durchgängig einheitlichen Querschnitt ausgebildet. An den Kettenbändern sind in Querrichtung erstreckte metallische Kettenstege befestigt.

Aufgabe der Erfindung ist es, eine Laufwerkskette für eine Pistenraupe der eingangs genannten Art zu schaffen, die gegenüber herkömmlichen Laufwerksketten eine verringerte Masse aufweist. Zudem soll eine Pistenraupe geschaffen werden, die gegenüber herkömmlichen Pistenraupen verbesserte Fahreigenschaften aufweist.

Für die Laufwerkskette wird diese Aufgabe durch die Merkmale des Anspruchs 1 gelöst. Gegenüber herkömmlichen Laufwerksketten kann somit an den Kettenbändern an den Stellen auf Material verzichtet werden, die für die Kraftübertragung eine untergeordnete Rolle spielen. Umgekehrt kann an solchen Stellen Material beibehalten werden, die im Betrieb besonders belastet werden. Infolge des weitgehend gleichmäßigen Kraftflusses in dem Kettenband der erfindungsgemäßen Laufwerkskette erweist sich die Laufwerkskette als besonders robust. Hohe punktuelle Belastungen an Verbindungsstellen zwischen dem wenigstens einen Kettenband und den Kettenstegen werden reduziert. Dadurch reduziert sich auch die Belastung der Kettenstege selbst, so dass sich eine Lebensdauer der Kettenstege erhöht. Bei in Querrichtung versetzten Kettenstegen ergibt sich ein verbesserter Kraftfluss zwischen inneren und äußeren Kettenstegen. Schneeeinlauf und Schneeauslauf können im Betrieb der Laufwerkskette gezielt optimiert werden, da das Verhältnis von Bandmaterial und Aussparungen an jeder Stelle und in beliebiger Form angepasst werden kann. Kraft- oder Spannungsspitzen in dem Material des Kettenbands lassen sich vermindern oder sogar vermeiden. Das Kettenband kann zur Übertragung eines gegebenen Kraftflusses mit minimalem Materialaufwand ausgelegt werden. Es ergibt sich ein besonders leichtbauendes Kettenband und damit auch eine besonders leichtbauende Laufwerkskette. Durch die Kraftflussoptimierung ist es zudem möglich, eine gegenüber dem Stand der Technik reduzierte Anzahl an Kettenbändern einzusetzen, insbesondere lediglich ein bis drei Kettenbänder, deren Breite gegenüber bekannten Kettenbändern signifikant, insbesondere wenigstens zweifach, erhöht sein kann.

In Ausgestaltung der Erfindung weisen die Aussparungen eine eckige, insbesondere im Wesentlichen dreieckige oder trapezförmige Formgebung auf. "Trapezförmig" beinhaltet dabei sowohl rechteckige als auch nicht rechteckige Trapezgeometrien. Die betreffende Formgebung kann mit gefasten oder verrundeten Ecken ausgebildet sein. Aussparungen mit einer derartigen Formgebung lassen sich besonders kostengünstig herstellen. Durch das Vorsehen von Fasen oder Verrundungen an den Ecken der Geometrie der Aussparungen lassen sich Spannungsspitzen einerseits bei der Erzeugung der Aussparungen und andererseits auch im Betrieb der Laufwerkskette minimieren oder sogar vollständig vermeiden. Dies führt vorteilhaft zu einer besonders langlebigen Laufwerkskette. Alternativ oder zusätzlich können Aussparungen mit runder Formgebung vorgesehen sein.

In weiterer Ausgestaltung der Erfindung ist wenigstens ein Teil der Aussparungen in wenigstens einer Reihe entlang der Kettenlaufrichtung angeordnet, wobei die der Reihe zugehörigen Aussparungen in einem einheitlichen Abstand zu einer Kettenmitte der Laufwerkskette bezüglich der Querrichtung angeordnet sind. Die Aussparungen der Reihe können entlang der Kettenlaufrichtung äquidistant zueinander angeordnet sein. Die in einer Reihe angeordneten Aussparungen lassen sich vorteilhaft besonders effizient mittels eines walzenförmigen Stanzwerkzeugs erzeugen, an dessen Umfang Stempel mit der Komplementär-Geometrie der jeweils zu erzeugenden Aussparungen angeordnet sind.

In weiterer Ausgestaltung der Erfindung sind mehrere Reihen an Aussparungen vorhanden, die zueinander, insbesondere entlang der Querrichtung, im Abstand angeordnet sind. Auf diese Weise lassen sich besonders viele Aussparungen an dem Kettenband anbringen, was zu einer besonders leichtbauenden Laufwerkskette führt.

In weiterer Ausgestaltung der Erfindung sind erste Aussparungen vorhanden, die eine sich entlang der Querrichtung zur Kettenmitte der Laufwerkskette hin verjüngende Formgebung aufweisen. Hierdurch lässt sich ein Schneeein- und Schneeauslauf an Schnee, der im Betrieb der Laufwerkskette durch die Aussparungen geführt werden kann, in besonders vorteilhafter Weise beeinflussen. Hierdurch lässt sich vorteilhaft einem Ansammeln von Schnee auf der Innenseite der Laufwerkskette besonders wirksam entgegenwirken.

In weiterer Ausgestaltung der Erfindung schließt sich entlang der Querrichtung an jede der ersten Aussparungen, insbesondere direkt, einer der Kettenstege an. Die ersten Aussparungen können an ersten Längsenden der Kettenstege angeordnet sein. An entsprechender Stelle ist die Belastung des Kettenbandes bei herkömmlichen aussparungsfreien Laufwerksketten besonders groß. Eine über die Kettenstege in das Kettenband eingebrachte Belastung lässt sich somit durch die ersten Aussparungen besonders gleichmäßig in das Kettenband einleiten.

In weiterer Ausgestaltung der Erfindung sind zweite Aussparungen vorhanden, die zwischen entlang der Kettenlaufrichtung benachbarten Kettenstegen angeordnet sind. Schnee, der auf eine Innenseite der Laufwerkskette gelangt, kann somit vorteilhaft nach außen geleitet werden, ohne sich zwischen den Kettenstegen anzusammeln.

In weiterer Ausgestaltung der Erfindung sind die ersten Aussparungen jeweils größer als, insbesondere wenigstens doppelt so groß wie, eine der zweiten Aussparungen. Umgekehrt ausgedrückt sind also die zweiten Aussparungen jeweils kleiner als, insbesondere höchstens halb so groß wie, eine der ersten Aussparungen. Auf diese Weise lassen sich besonders viele Aussparungen an dem Kettenband anbringen. Es versteht sich, dass die ersten und die zweiten Aussparungen alternativ gleich groß sein können. Die Größe der Aussparungen bezieht sich dabei vorzugsweise auf eine quer zu einer Dickenrichtung der Laufwerkskette verlaufende Querschnittsfläche der jeweiligen Aussparung.

In weiterer Ausgestaltung der Erfindung ist ein Teil der Aussparungen in einem, insbesondere spiegel- oder/und punktsymmetrischen, Muster gruppiert, das sich entlang der Kettenlaufrichtung für alle Aussparungen wiederholt. Derartige Aussparungen lassen sich besonders kostengünstig erzeugen, da ein- und dasselbe Lochungswerkzeug, insbesondere Stanzwerkzeug, zur Erzeugung aller Aussparungen des Musters in einem Schritt und zudem gleich vielfach für die Wiederholung des Musters verwendet werden kann.

In weiterer Ausgestaltung der Erfindung bilden zwischen den Aussparungen vorhandene Bereiche des Kettenbands Zugstränge oder/und Querverbindungen für den Kraftfluss aus, wobei die Zugstränge oder/und Querverbindungen insbesondere jeweils eine über die Kettenlaufrichtung oder/und die Querrichtung konstant bleibende oder sich ändernde Dicke aufweisen. Da somit vorteilhaft die Materialverteilung im Kettenband an die Belastung angepasst verteilt werden kann, ergibt sich eine besonders leichtbauende Laufwerkskette.

Zweckmäßig weist das Kettenband wenigstens eine, insbesondere textile, Verstärkungslage auf, die entlang der Dickenrichtung des Kettenbands zwischen zwei je ein Elastomer umfassenden Gummischichten angeordnet ist. Eine Anzahl an Verstärkungslagen kann lokal variieren. Dabei können mehrere Gummischichten und Verstärkungslagen entlang der Dickenrichtung im Wechsel zueinander angeordnet sein. Die Verstärkungslage kann Fasern umfassen, die entlang der Kettenlaufrichtung oder/und winklig zur Kettenlaufrichtung längserstreckt sind. Es ergibt sich eine besonders robuste und zugleich leicht bauende Laufwerkskette.

In weiterer Ausgestaltung der Erfindung sind zwei Kettenbänder vorhanden, von welchen jedes an einer von zwei einander entlang der Querrichtung gegenüberliegenden Flanken der Laufwerkskette angeordnet ist und die mittels der Kettenstege miteinander verbunden sind. Da somit im Vergleich zu herkömmlichen Laufwerksketten eine drastisch verminderte Anzahl an Kettenbändern verwendet wird, ergibt sich ein besonders geringer Montageaufwand beim Verbinden der lediglich zwei Kettenbänder mittels der Kettenstege. Es können mehr als zwei Kettenbänder vorhanden sein, die entlang der Querrichtung zueinander beabstandet angeordnet und mittels der Kettenstege miteinander verbunden sind.

In weiterer Ausgestaltung der Erfindung unterscheiden sich die beiden Kettenbänder in ihrer Erstreckung entlang der Querrichtung. Insbesondere bei nachgiebigem Untergrund wie einer Schneeoberfläche lässt sich somit eine Aufstandskraft zwischen Untergrund und Laufwerkskette im Abstand zur Kettenmitte in ein Kettenlaufwerk mit der Laufwerkskette einleiten. Zudem führt die unterschiedlich breite Ausbildung der beiden Kettenbänder dazu, dass beim Überfahren der Schneeoberfläche Schnee entlang der Querrichtung zu einer Seite hin verdrängt wird. Dies kann einem Aufschwimmen der Laufwerkskette auf der Schneeoberfläche entgegenwirken. Alternativ kann die Erstreckung der beiden Kettenbänder entlang der Querrichtung gleich groß sein.

In weiterer Ausgestaltung der Erfindung sind jeweils zwei entlang der Kettenlaufrichtung benachbarte Kettenstege entlang der Querrichtung versetzt zueinander angeordnet. Dies führt zu einer besonders gleichmäßigen Krafteinleitung über die Querrichtung. Alternativ können die Kettenstege relativ zueinander bezüglich der Querrichtung versetzungsfrei angeordnet sein.

Für die Pistenraupe wird die der Erfindung zugrunde liegenden Aufgabe durch die Merkmale des Anspruchs 14 gelöst. Entsprechend übertragen sich die zuvor aufgezeigten Vorteile der erfindungsgemäßen Laufwerkskette auch auf die Pistenraupe gemäß der Erfindung. Der gegenüber dem Stand der Technik verbesserte Kraftfluss der Laufwerksketten im Betrieb der Pistenraupe führt zu einem verbesserten Fahrverhalten der erfindungsgemäßen Pistenraupe.

Zweckmäßig wird das Kettenband für die erfindungsgemäße Laufwerkskette gemäß der voranstehenden Beschreibung mittels eines Verfahrens hergestellt, welches nachfolgende Maßnahmen a) bis e) umfasst. Gemäß Maßnahme a) erfolgt ein Bereitstellen von zwei je elastomerhaltigen Gummi-Halbzeugen zur Erzeugung von Gummischichten. Gemäß Maßnahme b) erfolgt ein Versehen jedes der Gummi-Halbzeuge mit Aussparungen, deren Position und Formgebung vorzugsweise belastungsgerecht festgelegt werden. In Maßnahme c) erfolgt ein Bereitstellen einer, insbesondere textilen, Verstärkungslage. Maßnahme d) sieht ein Anordnen der Verstärkungslage zwischen den beiden Gummi-Halbzeugen vor. Zudem erfolgt gemäß Maßnahme e) ein Verbinden der Gummi-Halbzeuge und der dazwischen angeordneten Verstärkungslage, so dass das Kettenband und die an diesem vorhandenen Aussparungen des Kettenbands erzeugt werden.

Besonders zweckmäßig wird in Maßnahme d) die Verstärkungslage um die Aussparungen der Gummi-Halbzeuge herum derart angeordnet, dass die Verstärkungslage von den beiden Gummi-Halbzeugen vollständig bedeckt wird. Somit lässt sich das Kettenband mit seinen Aussparungen vorteilhaft erzeugen, ohne dass dabei die Verstärkungslage durchtrennt wird. Zudem lässt sich eine Oberfläche des Kettenbands zu allen Seiten hin vollständig durch eine Gummischicht ausbilden. Mit anderen Worten: Die Verstärkungslage ist vollständig von der Gummischicht umgeben. Dies schützt die Verstärkungslage vor mechanischen Einflüssen sowie vor Witterungseinflüssen, so dass sich das mittels des vorstehend erläuterten Verfahrens hergestellte Kettenband als besonders robust erweist.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.
- Fig. 1: zeigt in einer schematischen Seitendarstellung eine Ausführungsform einer erfindungsgemäßen Pistenraupe mit einer gemäß der Erfindung ausgeführten Laufwerkskette,
- Fig. 2: eine schematische Perspektivdarstellung eines Abschnitts eines Kettenbands der Laufwerkskette nach Fig. 1,
- Fig. 3: eine schematische Draufsicht eines Abschnitts der Laufwerkskette nach Fig. 1,
- Fig. 4: eine schematische Seitendarstellung des Abschnitts nach Fig. 3 und
- Fig. 5: ein Blockschaubild für ein Verfahren zur Herstellung des Kettenbands nach Fig. 2.

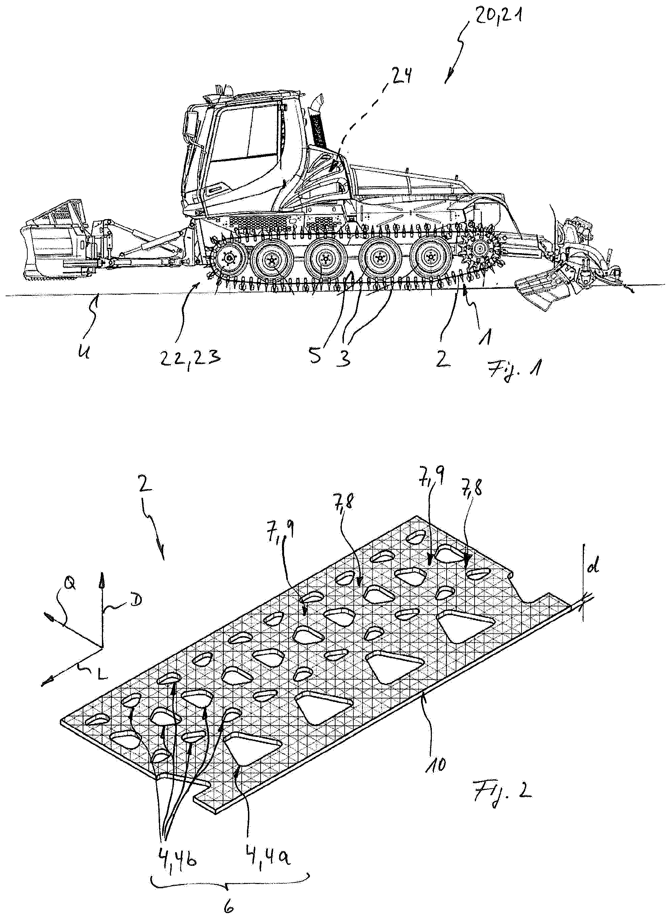

Ein Kettenfahrzeug 20 nach Fig. 1 ist für den Einsatz in einem Skigebiet, so zum Präparieren einer Schneepiste, vorgesehen. Bei dem Kettenfahrzeug handelt es sich um eine Pistenraupe 21. Das Kettenfahrzeug 20 weist ein Kettenfahrwerk 22 auf. Das Kettenfahrwerk 22 weist an einander gegenüberliegenden Seiten jeweils ein Kettenlaufwerk 23 auf. Das Kettenlaufwerk 23 umfasst eine Laufwerkskette 1, die gemäß der Erfindung ausgeführt ist. Zudem umfasst das Kettenlaufwerk 23 ein frontseitig angeordnetes Spannrad, ein heckseitig angeordnetes Antriebsrad sowie zwischen Spann- und Antriebsrad in einer Reihe angeordnete Laufräder. Die Laufwerkskette 21 ist umlaufend über das Spannrad, das Antriebsrad sowie die dazwischen angeordneten Laufräder geführt. Das Antriebsrad ist mit einem Antriebsaggregat 24 des Kettenfahrzeugs 20 antriebsverbunden. Die Laufwerkskette 1 ist mit dem Antriebsrad antriebsverbunden. Somit lässt sich die Laufwerkskette 1 mittels des Antriebsaggregats 24 und des Antriebsrads antreiben, um das Kettenfahrzeug 20 in eine Fahrbewegung zu versetzen.

Die Laufwerkskette 1 umfasst wenigstens ein flexibles Kettenband 2. Das Kettenband 2 ist in einer Kettenlaufrichtung L längserstreckt. Die Laufwerkskette 1 umfasst ferner eine Vielzahl an in Kettenlaufrichtung L voneinander beabstandete und in Querrichtung Q erstreckte Kettenstege 3. Die Kettenstege 3 sind an dem wenigstens einen Kettenband 2 befestigt. Die Kettenstege 3 können mittels einer Niet- oder einer Schraubverbindung an dem Kettenband 2 befestigt sein. Das Kettenband 2 ist mit Aussparungen 4 versehen, die in Kettenlaufrichtung L zwischen den Kettenstegen 3 angeordnet sind. Die Aussparungen 4 sind derart gestaltet und angeordnet, dass sich bei Belastung der Laufwerkskette 1 ein zumindest weitgehend gleichmäßiger Kraftfluss in dem Kettenband 2 zwischen den benachbarten Kettenstegen 3 ergibt. Unter benachbarten Kettenstegen 3 sind dabei jene Kettenstege 3 zu verstehen, die entlang der Kettenlaufrichtung L unmittelbar aufeinanderfolgend angeordnet sind.

Vorliegend umfasst die Laufwerkskette 1 eine Vielzahl an Spurbügeln 5. Mittels der Spurbügel 5 ist die Antriebsverbindung der Laufwerkskette 1 mit dem Antriebsrad bewirkt. Hierzu kann das Antriebsrad formschlüssig mit den Spurbügeln 5 kämmen. Zudem stehen die Spurbügel 5 entlang der Querrichtung Q mit den Laufrädern und dem Spannrad in Formschluss, um die Seitenführung der Laufwerkskette 1 sicherzustellen. Die Laufwerkskette 1 weist vorliegend ferner eine Vielzahl an Eispickeln 12 auf, um die Traktion der Laufwerkskette 1 auf eisigem Untergrund U zu erhöhen. Dabei sind bei der gezeigten Ausführungsform an jedem Kettensteg 3 zwei Eispickel 12 vorhanden. Zum Vortrieb des Kettenfahrzeugs 20 steht jede Laufwerkskette 1 der beiden Kettenlaufwerke 23 mit dem Untergrund U in Wirkverbindung.

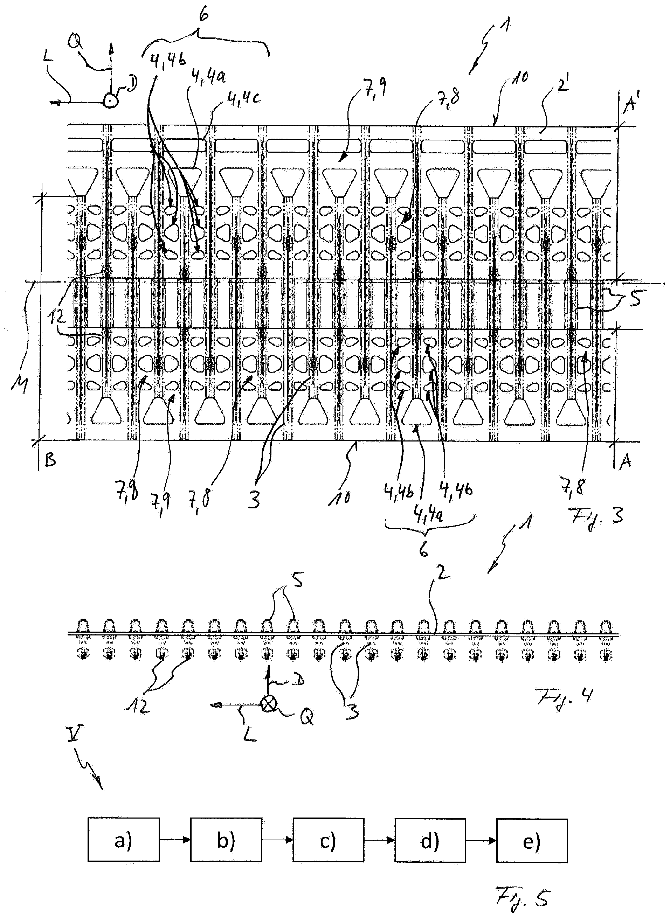

Vorliegend ist die Laufwerkskette 1 mit zwei Kettenbändern 2 ausgestattet. Jedes Kettenband 2, 2' weist eine Erstreckung A, A` entlang der Querrichtung Q auf. Wie Fig. 3 erkennen lässt, ist dabei eine Erstreckung B der Kettenstege 3 wenigstens doppelt so groß wie die Erstreckung A des Kettenbands 2. Die Erstreckung A des Kettenbands 2 beträgt vorliegend wenigstens ein Drittel der auf die Querrichtung Q bezogenen Erstreckung B der Kettenstege 3. Die Erstreckung A` des Kettenbands 2' ist vorliegend wenigstens halb so groß wie die Erstreckung B der Kettenstege 3. Jedes der beiden Kettenbänder 2, 2' ist an einer von zwei einander entlang der Querrichtung Q gegenüberliegenden Flanken 10 der Laufwerkskette 1 angeordnet. Dabei sind die beiden Kettenbänder 2, 2' mittels der Kettenstege 3 miteinander verbunden. Die Kettenstege 3 schließen entlang der Kettenlaufrichtung L abwechselnd mit jeweils einer der bezüglich der Querrichtung Q gegenüberliegenden Flanken 10 ab. Die beiden Kettenbänder 2, 2' unterscheiden sich in ihrer Erstreckung A, A` entlang der Querrichtung Q. Dabei ist die Erstreckung A zwischen 0,5 und 1,0-mal, insbesondere zwischen 0,5- und 0,8-mal, so groß wie die Erstreckung A'. Zwei entlang der Kettenlaufrichtung L benachbarte Kettenstege 3 sind entlang der Querrichtung Q versetzt zueinander angeordnet. Alternativ können die Kettenstege 2 entlang der Querrichtung Q versetzungsfrei angeordnet sein, beispielsweise so, dass sie jeweils beidenends mit den einander gegenüberliegenden Flanken 10, insbesondere bündig, abschließen.

Vorliegend weisen die Aussparungen 4 eine im Wesentlichen dreieckige oder trapezförmige Formgebung auf. "Trapezförmig" umfasst dabei ausdrücklich sowohl rechteckige als auch nicht rechteckige Trapezgeometrien. "Im Wesentlichen" dreieckig oder trapezförmig bedeutet dabei, dass Kanten oder Ecken der jeweiligen Geometrie mit einer Fase oder einer Verrundung versehen sein können. Wenigstens ein Teil der Aussparungen 4 ist vorliegend in wenigstens einer Reihe entlang der Kettenlaufrichtung L angeordnet. Dabei sind die einer jeweiligen Reihe zugehörigen Aussparungen 4 entlang der Querrichtung Q in einem einheitlichen Abstand zu einer Kettenmitte M der Laufwerkskette 1 angeordnet. Die Kettenmitte M entspricht der Mitte der Laufwerkskette 1 bezüglich der Querrichtung Q. Bei der gezeigten Ausführungsform sind mehrere derartiger Reihen vorhanden. Die Aussparungen 4 jeder Reihe sind beispielsweise mit einer einheitlichen Geometrie ausgeführt. Eine Ausrichtung der Aussparungen 4 einer jeweiligen Reihe kann innerhalb der Reihe variieren. Die mehreren Reihen an Aussparungen 4 sind vorliegend zueinander im Abstand angeordnet. Entsprechend sind die Reihen entlang der Querrichtung Q zueinander beabstandet. Die Reihen können parallel zueinander angeordnet sein. Alternativ oder zusätzlich können Aussparungen mit runder Formgebung vorgesehen sein.

Vorliegend sind erste Aussparungen 4, 4a vorhanden. Die ersten Aussparungen 4, 4a weisen eine sich entlang der Querrichtung Q zur Kettenmitte M der Laufwerkskette 1 hin verjüngende Formgebung auf. Beispielsweise sind die ersten Aussparungen 4, 4a mit einer dreieckigen Formgebung ausgeführt, die zur Kettenmitte M hin zugespitzt ist. Vorliegend sind die ersten Aussparungen 4, 4a mit der Formgebung eines im Wesentlichen gleichseitigen Dreiecks ausgebildet.

An jede der ersten Aussparungen 4, 4a schließt sich vorliegend entlang der Querrichtung Q einer der Kettenstege 3 an. Jeweils einer der Kettenstege 3 fluchtet entlang der Querrichtung Q mit einer der ersten Aussparungen 4, 4a. Die Kettenstege 3 sind jeweils entlang der Querrichtung Q unmittelbar, also direkt oder abstandsfrei, an jeweils eine der ersten Aussparungen 4, 4a angeschlossen. Die Kettenstege 3 sind entlang der Querrichtung Q im Wechsel an die ersten Aussparungen 4, 4a je eines der beiden Kettenbänder 2, 2' angeschlossen. Das heißt, ein erster Kettensteg 3 ist an eine erste der Aussparung 4, 4a des Kettenbands 2 angeschlossen und ein zweiter, in Kettenlaufrichtung L unmittelbar zu dem ersten benachbarter zweiter Kettensteg 3 ist unmittelbar an eine der ersten Aussparungen 4, 4a des anderen Kettenbands 2' angeschlossen. Zwischen entlang der Kettenlaufrichtung L benachbarten Kettenstegen 3 sind vorliegend zweite Aussparungen 4, 4b angeordnet. Die zweiten Aussparungen 4, 4b sind jeweils kleiner als die ersten Aussparungen 4, 4a. Beispielsweise sind die ersten Aussparungen 4, 4a wenigstens doppelt so groß wie die zweiten Aussparungen 4, 4b. Beide Kettenbänder 2, 2' sind vorliegend mit ersten und zweiten Aussparungen 4, 4a, 4b ausgeführt, deren Geometrie spiegelbildlich aber ansonsten kongruent ist. Folglich können die ersten und zweiten Aussparungen 4, 4a, 4b für beide Kettenbänder 2, 2' mit demselben Lochungswerkzeug, insbesondere Stanzwerkzeug, hergestellt werden.

Bei der gezeigten Ausführungsform ist ein Teil der Aussparungen 4, 4a, 4b in einem Muster 6 gruppiert. Dieses Muster 6 kann spiegel- oder/und punktsymmetrisch ausgebildet sein. Das Muster 6 wiederholt sich entlang der Kettenlaufrichtung L für alle Aussparungen 4, 4a, 4b. Im Unterschied zum Kettenband 2 sind beim Kettenband 2` zusätzlich zu den ersten und den zweiten Aussparungen 4, 4a, 4b dritte Aussparungen 4, 4c vorhanden. Diese weisen eine längliche, rechteckige Formgebung auf. Die dritten Aussparungen 4, 4c sind dabei entlang der Querrichtung Q zwischen der am Kettenband 2' vorhandenen Flanke 10 und den ersten Aussparungen 4, 4a des Kettenbands 2' angeordnet. Die dritten Aussparungen 4, 4c können beim Kettenband 2` dem Muster 6 zugehören. Vorliegend umfasst das Muster 6 eine der ersten Aussparungen 4, 4a und drei Paare an zweiten Aussparungen 4, 4b, die jeweils spiegelbildlich zueinander ausgebildet sind.

Das Kettenband 2' unterscheidet sich von dem Kettenband 2 ausschließlich in seiner Breite und darin, dass bei dem Kettenband 2` dritte Aussparungen 4, 4c vorhanden sind, die bei dem Kettenband 2 nicht vorhanden sind.

Zwischen den Aussparungen 4, 4a, 4b, 4c vorhandene Bereiche 7 des Kettenbands 2 bilden Zugstränge 8 sowie - alternativ oder zusätzlich - Querverbindungen 9 für den Kraftfluss aus. Die Zugstränge 8 dienen dabei maßgeblich zum Übertragen von Zugkräften. Demgegenüber dienen die Querverbindungen 9 maßgeblich zum Übertragen von Quer- und Seitenführungskräften. Gemeinsam können die Zugstränge 8 und die Querverbindungen 9 Verwindungskräfte übertragen. Die Zugstränge 8 sowie - alternativ oder zusätzlich - die Querverbindungen 9 weisen beispielsweise jeweils eine über die Kettenlaufrichtung L oder/und die Querrichtung Q gleichbleibende oder sich ändernde Dicke d auf. Das Kettenband 2 kann wenigstens eine, beispielsweise textile, Verstärkungslage aufweisen. Die Verstärkungslage kann entlang einer Dickenrichtung D des Kettenbands 2 zwischen zwei je ein Elastomer umfassenden Gummischichten des Kettenbands 2 angeordnet sein. Bei der Verstärkungslage kann es sich um ein Gelege, Gewebe, Gestrick, Gewirke mit oder aus Fasern handeln. Eine Anzahl an Verstärkungslagen kann lokal variieren. Es können mehrere Gummischichten und Verstärkungslagen, insbesondere entlang der Dickenrichtung D, im Wechsel zueinander angeordnet sein. Die Fasern der Verstärkungslage können entlang der Kettenlaufrichtung L oder/und winklig zu der Kettenlaufrichtung L längserstreckt sein.

Die Fig. 5 illustriert ein Verfahren V zum Herstellen des Kettenbands 2. Das Verfahren V umfasst demnach eine Maßnahme a), gemäß welcher zur Erzeugung von Gummischichten des Kettenbands 2 zwei jeweils elastomerhaltige Gummi-Halbzeuge bereitgestellt werden. Das Verfahren V umfasst ferner eine Maßnahme b), gemäß welcher jedes der Gummi-Halbzeuge mit Aussparungen 4 versehen wird, deren Position und Formgebung beispielsweise belastungsgerecht festgelegt werden. Zudem umfasst das Verfahren eine Maßnahme c), gemäß welcher eine Verstärkungslage bereitgestellt wird. Die Verstärkungslage kann textil ausgebildet sein. Darüber hinaus umfasst das Verfahren V eine Maßnahme d), gemäß welcher die Verstärkungslage zwischen den beiden Gummi-Halbzeugen angeordnet wird. In einer weiteren Maßnahme e) des Verfahrens V erfolgt ein Verbinden der Gummi-Halbzeuge und der dazwischen angeordneten Verstärkungslage derart, dass das Kettenband 2 mitsamt den Aussparungen 4 erzeugt wird. Das Verbinden kann mittels Vulkanisation erfolgen. Dabei werden die Aussparungen 4 des Kettenbands so erzeugt, dass die Verstärkungslage an keiner Stelle durchtrennt wird. In Maßnahme d) wird die Verstärkungslage hierfür um die Aussparungen der Gummi-Halbzeuge herum - also im Abstand zu den Aussparungen - angeordnet, so dass die Verstärkungslage von den beiden Gummi-Halbzeugen vollständig bedeckt wird.

## Patentansprüche

1. Laufwerkskette (1) für eine Pistenraupe (21), mit wenigstens zwei in Kettenlaufrichtung längserstreckten und in Querrichtung (Q) zueinander beabstandeten Kettenbändern (2, 2'),
sowie mit einer Vielzahl an in Kettenlaufrichtung (L) voneinander beabstandeten, in Querrichtung (Q) erstreckten und die wenigstens zwei Kettenbänder (2, 2`) miteinander verbindenden metallischen Kettenstegen (3), **dadurch gekennzeichnet, dass**
jedes Kettenband (2, 2`) - in Kettenlaufrichtung (L) zwischen den Kettenstegen (3) - mit Aussparungen (4, 4a, 4b, 4c) versehen ist, die derart gestaltet und angeordnet sind, dass sich bei Belastung der Laufwerkskette (1) ein zumindest weitgehend gleichmäßiger Kraftfluss in dem Kettenband (2, 2`) zwischen den benachbarten Kettenstegen (3) ergibt.

2. Laufwerkskette (1) nach Anspruch 1, **dadurch gekennzeichnet, dass** die Aussparungen (4, 4a, 4b, 4c) eine eckige, insbesondere im Wesentlichen dreieckige oder trapezförmige Formgebung aufweisen.

3. Laufwerkskette (1) nach Anspruch 1 oder 2, **dadurch gekennzeichnet, dass** wenigstens ein Teil der Aussparungen (4, 4a, 4b, 4c) in wenigstens einer Reihe entlang der Kettenlaufrichtung (L) angeordnet ist, wobei die der Reihe zugehörigen Aussparungen (4) in einem einheitlichen Abstand zu einer Kettenmitte (M) der Laufwerkskette (1) bezüglich der Querrichtung (Q) angeordnet sind.

4. Laufwerkskette (1) nach Anspruch 3, **dadurch gekennzeichnet, dass** mehrere Reihen an Aussparungen (4) vorhanden sind, die zueinander im Abstand angeordnet sind.

5. Laufwerkskette (1) nach einem der vorhergehenden Ansprüche, **dadurch gekennzeichnet, dass** erste Aussparungen (4, 4a) vorhanden sind, die eine sich entlang der Querrichtung (Q) zur Kettenmitte (M) der Laufwerkskette (1) hin verjüngende Formgebung aufweisen.

6. Laufwerkskette (1) nach Anspruch 5, **dadurch gekennzeichnet, dass** sich entlang der Querrichtung (Q) an jede der ersten Aussparungen (4, 4a), insbesondere direkt, einer der Kettenstege (3) anschließt.

7. Laufwerkskette (1) nach einem der vorhergehenden Ansprüche, **dadurch gekennzeichnet, dass** zweite Aussparungen (4, 4b) vorhanden sind, die zwischen entlang der Kettenlaufrichtung (L) benachbarten Kettenstegen (3) angeordnet sind.

8. Laufwerkskette (1) nach einem der Ansprüche 5 bis 7, **dadurch gekennzeichnet, dass** die ersten Aussparungen (4, 4a) jeweils größer sind als, insbesondere wenigstens doppelt so groß sind wie, eine der zweiten Aussparungen (4, 4b).

9. Laufwerkskette (1) nach einem der vorhergehenden Ansprüche, **dadurch gekennzeichnet, dass** ein Teil der Aussparungen (4, 4a, 4b, 4c) in einem, insbesondere spiegel- oder/und punktsymmetrischen, Muster (6) gruppiert ist, das sich entlang der Kettenlaufrichtung (L) für alle Aussparungen (4, 4a, 4b, 4c) wiederholt.

10. Laufwerkskette (1) nach einem der vorhergehenden Ansprüche, **dadurch gekennzeichnet, dass** zwischen den Aussparungen (4, 4a, 4b, 4c) vorhandene Bereiche (7) des Kettenbandes (2) Zugstränge (8) oder/und Querverbindungen (9) für den Kraftfluss ausbilden, wobei die Zugstränge (8) oder/und Querverbindungen (9) insbesondere jeweils eine über die Kettenlaufrichtung (L) oder/und die Querrichtung (Q) gleichbleibende oder sich ändernde Dicke (d) aufweisen.

11. Laufwerkskette (1) nach einem der vorhergehenden Ansprüche, **dadurch gekennzeichnet, dass** zwei Kettenbänder (2, 2`) vorhanden sind, von welchen jedes an einer von zwei einander entlang der Querrichtung (Q) gegenüberliegenden Flanken (10) der Laufwerkskette (1) angeordnet ist, und die mittels der Kettenstege (3) miteinander verbunden sind.

12. Laufwerkskette (1) nach Anspruch 11, **dadurch gekennzeichnet, dass** sich die beiden Kettenbänder (2, 2`) in ihrer Erstreckung (A, A') entlang der Querrichtung (Q) unterscheiden.

13. Laufwerkskette (1) nach einem der vorhergehenden Ansprüche, **dadurch gekennzeichnet, dass** je zwei entlang der Kettenlaufrichtung (L) benachbarte Kettenstege (3) entlang der Querrichtung (Q) versetzt zueinander angeordnet sind.

14. Pistenraupe (21), aufweisend ein Kettenfahrwerk (22), das an einander gegenüberliegenden Seiten jeweils ein Kettenlaufwerk (23) mit einer Laufwerkskette (1) nach einem der vorhergehenden Ansprüche aufweist.
